# EUROPEAN PATENT SPECIFICATION

(11) **EP 3 312 144 B1**
(45) Date of publication and mention of the grant of the patent: **23.10.2019**
(21) Application number: 16814260.2
(22) Date of filing: 16.06.2016
(51) Int. Cl.: C22B 59/00, C22B 3/08, C22B 3/20, C22B 3/24, C22B 3/38

(54) **PROCESS FOR PRODUCING SCANDIUM OXIDE**
VERFAHREN ZUR HERSTELLUNG VON SCANDIUMOXID
PROCÉDÉ DE PRODUCTION D'OXYDE DE SCANDIUM

(30) Priority: 22.06.2015 JP 2015124835
(43) Date of publication of application: 25.04.2018
(73) Proprietor: Sumitomo Metal Mining Co., Ltd., Tokyo 105-8716 (JP)
(72) Inventor: HIGAKI, Tatsuya, Niihama-shi Ehime 792-0002 (JP); KOBAYASHI, Hiroshi, Niihama-shi Ehime 792-0002 (JP); NAGAI, Hidemasa, Niihama-shi Ehime 792-0002 (JP); MATSUMOTO, Shin-ya, Niihama-shi Ehime 792-0002 (JP)
(74) Representative: Jones, Nicholas Andrew
(86) International application number: PCT/JP2016/067981
(87) International publication number: WO 2016/208489

(56) References cited:
- JP-A- 2005 082 462
- JP-A- 2005 219 938
- JP-A- 2014 001 430
- JP-A- 2014 012 901
- JP-A- 2014 177 391
- US-A1- 2012 207 656
- E.L. HEAD ET AL: "The thermal decomposition of scandium formate and oxalate", JOURNAL OF INORGANIC AND NUCLEAR CHEMISTRY, vol. 26, no. 4, 1 April 1964 (1964-04-01), pages 525-530, XP55540679, ISSN: 0022-1902, DOI: 10.1016/0022-1902(64)80284-0

## Description

### TECHNICAL FIELD

The present invention relates to a process for producing scandium oxide, and more particularly, it relates to a process for producing scandium oxide by which scandium oxide having a suppressed sulfur content can be produced from scandium oxalate containing a sulfur component as an impurity.

Scandium is extremely useful as an additive of a high strength alloy and an electrode material of a fuel cell. However, scandium is not widely used because of a low production quantity and high price thereof.

Incidentally, scandium is contained in nickel oxide ores such as a laterite ore and a limonite ore in a small amount. However, nickel oxide ore has not been industrially utilized as a raw material of nickel for a long time since the grade of nickel contained therein is low. Hence, it has also been scarcely studied to industrially recover scandium from a nickel oxide ore.

However, in recent years, an HPAL process has been put into practical use in which a nickel oxide ore and sulfuric acid are charged into a pressurized vessel and heated at a high temperature of about from 240°C to 260°C to be separated into a solid and a liquid of a leachate containing nickel and a leach residue. In this HPAL process, the impurities are separated by adding a neutralizing agent to the leachate thus obtained and nickel can be subsequently recovered as nickel sulfide by adding a sulfurizing agent to the resulting leachate. Thereafter, electric nickel or a nickel salt compound can be obtained by treating the nickel sulfide thus obtained by an existing nickel smelting process.

In the case of using the HPAL process as described above, scandium contained in the nickel oxide ore is contained in the leachate together with nickel (see Patent Document 1). Moreover, scandium is contained in an acidic solution (liquid after sulfurization) after addition of a sulfurizing agent while a neutralizing agent is added to the leachate obtained in the HPAL process to separate impurities and a sulfurizing agent is subsequently added to the resulting leachate to recover nickel as nickel sulfide, and nickel and scandium can be thus effectively separated from each other by using the HPAL process.

As a process for recovering scandium from the acidic solution described above, a process has been proposed in which scandium is recovered by being adsorbed to a chelate resin to be separated from impurities and being concentrated (see Patent Document 2).

Meanwhile, a process for recovering scandium from an acidic solution obtained by a wet smelting treatment of a nickel oxide ore by a solvent extraction treatment has also been proposed (see Patent Document 3). In this process described in Patent Document 3, first, an organic solvent obtained by diluting 2-ethylhexylsulfonic acid-mono-2-ethylhexyl with kerosene is added to a scandium-containing solution of an aqueous phase containing one or more kinds of iron, aluminum, calcium, yttrium, manganese, chromium, or magnesium in addition to scandium and the scandium component is extracted into the organic solvent. Subsequently, in order to separate yttrium, iron, manganese, chromium, magnesium, aluminum, and calcium which have been extracted into the organic solvent together with scandium, these are removed by adding an aqueous solution of hydrochloric acid to the organic solvent and conducting scrubbing, then an aqueous solution of NaOH is added to the organic solvent to convert scandium remaining in the organic solvent into a slurry containing Sc(OH)₃, and Sc(OH)₃ obtained by filtering this is dissolved in hydrochloric acid to obtain an aqueous solution of scandium chloride. Thereafter, oxalic acid is added to the aqueous solution of scandium chloride thus obtained to obtain a precipitation of scandium oxalate, this precipitation is filtered to separate iron, manganese, chromium, magnesium, aluminum, and calcium into the filtrate, the resultant precipitate is calcined in an air atmosphere, and scandium oxalate is heated and oxidized to obtain scandium oxide.

Patent Document 1: Japanese Unexamined Patent Application, Publication No. 2005-350766
Patent Document 2: Japanese Unexamined Patent Application, Publication No. H09-194211
Patent Document 3: Japanese Unexamined Patent Application, Publication No. H09-29132C

The thermal decomposition of scandium formate and scandium oxalate in vacuum and various atmospheres has been studied using an automatic recording thermobalance, as described by E.L. Head et al., "The thermal decomposition of scandium formate and oxalate",JOURNAL OF INORGANIC AND NUCLEAR CHEMISTRY, vol. 26, no. 4, 1 April 1964, pages 525-530.

### DISCLOSURE OF THE INVENTION

### Problems to be Solved by the Invention

Incidentally, for example, in the refinement process described above, free sulfuric acid remains in the treatment liquid exhibiting acidity by sulfuric acid and the free sulfuric acid reacts with additives such as a neutralizing agent to be added for the refinement treatment of scandium to form a sulfur-containing compound such as calcium sulfate in some cases. It is difficult to separate such a sulfur-containing compound from scandium because of a problem of solubility in water and the like, it is impossible to effectively separate and remove the sulfur-containing compound even by the ion exchange treatment and solvent extraction treatment described above, and as a result, the sulfur-containing compound is contained in the precipitate of scandium oxalate as a sulfate radical.

Incidentally, when using the ion exchange treatment or solvent extraction treatment, for example, it is considered to use an acid other than sulfuric acid as an eluent, and it is considered that the sulfate radical to be contained in scandium oxalate is decreased in this case, but it is preferable to use a sulfuric acid solution when taking the industrial scale and cost, labor for the wastewater treatment, and the like into consideration, and the problem of sulfate radial is not solved.

In the operation to recover scandium from a nickel oxide ore, scandium is recovered in the form of scandium oxide by subjecting scandium oxalate obtained by the refinement process described above to a roasting treatment. A sulfur compound remains as a sulfate radical even in scandium oxide to be obtained when a sulfur-containing compound is contained in the precipitation of scandium oxalate as an impurity at this time.

A process for decreasing the content of sulfur-containing compound by subjecting scandium oxalate to a repulping treatment before scandium oxalate is roasted to generate scandium oxide is also considered, but the process is not efficient from the viewpoint of treatment cost, labor, and the like since it is required to conduct the repulping treatment using pure water a number of times in order to decrease the content to a desired value. In addition, it is impossible to effectively remove sulfate solids such as calcium sulfate even by such a repulping treatment, the sulfate solids remain in scandium oxide to be obtained, and as a result, it is difficult to obtain high purity scandium oxide.

The present invention has been made in view of the above circumstances, and an object thereof is to provide a process for producing scandium oxide by which scandium oxide having a suppressed content of a sulfur component can be produced when obtaining scandium oxide from scandium oxalate containing a sulfur-containing compound as an impurity.

### Means for Solving the Problems

The inventors of the present invention have conducted extensive studies in order to solve the above-mentioned problems, and as a result, it has been found out that scandium oxide having a suppressed sulfur content can be produced by removing sulfur-containing compounds contained in scandium oxalate by a two-step heating process in which scandium oxalate containing sulfur-containing compounds as impurities is heated in an atmosphere not containing oxygen and then heated in an atmosphere containing oxygen, thereby completing the present invention. In other words, the present invention provides the following.
(1) The present invention is a process for producing scandium oxide having a decreased sulfur content, which includes a first heating step of heating scandium oxalate containing a sulfur-containing compound as an impurity in an atmosphere not containing oxygen, and a second heating step of further heating a heated product obtained in the first heating step in an atmosphere containing oxygen.
(2) In addition, the present invention is the process for producing scandium oxide having a decreased sulfur content according to (1), in which the scandium oxalate is a precipitate obtained by adding oxalic acid to a solution which contains scandium and exhibits acidity by sulfuric acid.
(3) In addition, the present invention is the process for producing scandium oxide having a decreased sulfur content according to (2), in which the solution which exhibits acidity by sulfuric acid is a solution obtained by adding a neutralizing agent to a leachate obtained by leaching a nickel oxide ore with sulfuric acid.

### Effects of the Invention

According to the present invention, it is possible to suppress the content of sulfur in scandium oxide to be obtained by subjecting scandium oxalate containing a sulfur-containing compound as an impurity to a two-step heat treatment in which the scandium oxalate is heated in an atmosphere not containing oxygen and then heated in an atmosphere containing oxygen, and thus to produce scandium oxide having far higher purity.

### BRIEF DESCRIPTION OF THE DRAWINGS

Fig. 1 is a diagram illustrating a process for producing scandium oxide according to the present invention.
Fig. 2 is a diagram for explaining a process for preparing a raw material of scandium oxalate according to an example of embodiments of the present invention.
Fig. 3 is a diagram illustrating the relation between sulfur contents in Examples and Comparative Examples of the present invention before and after a heat treatment.

### PREFERRED MODE FOR CARRYING OUT THE INVENTION

Hereinafter, specific embodiments of the present invention (hereinafter referred to as the "present embodiment") will be described in detail, but the present invention is not limited to the following embodiments at all and can be implemented with appropriate modifications within the scope of the invention as defined by the appended claims.

### <<1. Process for Producing Scandium Oxide>>

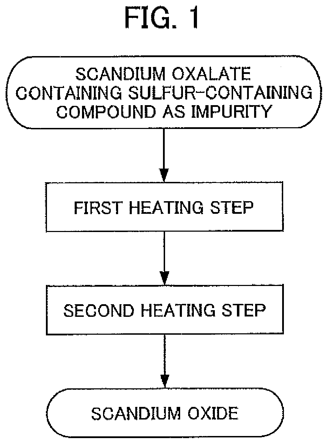

Fig. 1 is a flow chart illustrating the flow of the process for producing scandium oxide according to the present embodiment. As illustrated in the flow chart of Fig. 1, the process for producing scandium oxide according to the present embodiment includes a first heating step of heating scandium oxalate containing a sulfur-containing compound as an impurity in an atmosphere not containing oxygen and a second heating step of further heating the heated product obtained in the first heating step in an atmosphere containing oxygen.

In the first and second heating steps, it is considered that the reactions represented by the following Formulas (1) to (3) take place, respectively. Incidentally, a case in which the sulfur-containing compound contained in scandium oxalate as an impurity is calcium sulfate is described here as an example.

### [First Heating Step]

Sc₂(C₂O₄)₃·2H₂O→SC₂O₃+3CO₂+3CO+2H₂O ··· (1)

CaSO₄·2H₂O+2CO→CaO+SO₂+2CO₂+2H₂O ··· (2)

### [Second Heating Step]

Sc₂(C₂O₄)₃·2H₂O+3/2O₂ →SC₂O₃+6CO₂+2H₂O ··· (3)

First, in the first heating step, scandium oxalate is decomposed into scandium oxide and carbon monoxide and carbon dioxide by heating (Formula (1)). Subsequently, the carbon monoxide generated by this reaction reacts with calcium sulfate contained in scandium oxalate as an impurity to form calcium oxide and sulfur dioxide (Formula (2)). By this reaction, the sulfur element to be removed is removed as sulfur dioxide which is a gas under the heating conditions.

Next, in the second heating step, scandium oxalate which has not reacted in the first heating step is heated and oxidized to generate scandium oxide (Formula (3)).

Hitherto, scandium oxide has been generated by subjecting scandium oxalate to a roasting treatment in an atmosphere containing oxygen. In other words, since scandium oxide is generated only by the reaction of Formula (3) described above, calcium sulfate is not involved in the reaction even when sulfur-containing compounds such as calcium sulfate derived from gypsum are present in the system as impurities, and sulfur remains in scandium oxide thus generated as an impurity.

On the contrary, the process according to the present embodiment has a technical significance that sulfur components can be removed by generating SO₂ by the reaction of carbon monoxide generated by the reaction of Formula (1) described above with calcium sulfate since scandium oxide is generated by the two-step heating process including the first and second heating steps. This makes it possible to suppress residual sulfur in scandium oxide to be generated through Formula (3) described above and to produce scandium oxide having a suppressed sulfur content.

Hereinafter, the first heating step and the second heating step will be more specifically described.

### <1-1. First Heating Step>

The first heating step is a step of heating scandium oxalate containing a sulfur-containing compound as an impurity in an atmosphere not containing oxygen. By the present step, it is possible to remove the sulfur components which are included in the sulfur-containing compounds as impurities and cannot be removed by the conventional step of heating scandium oxalate containing a sulfur-containing compound as an impurity only in an atmosphere containing oxygen.

The heat treatment in the first heating step is not particularly limited, but for example, it can be conducted by using various kinds of furnaces such as a tube furnace. Industrially, it is preferable to use a continuous furnace such as a rotary kiln from the viewpoint of being able to conduct the drying of scandium oxalate of a raw material, the treatment in the first heating step, and the treatment in the second heating step in the same apparatus.

The treatment atmosphere in the first heating step is not particularly limited as long as the atmosphere does not contain oxygen. Specifically, for example, the treatment atmosphere can be an inert gas atmosphere such as nitrogen or argon or a vacuum atmosphere, and an inert gas atmosphere such as nitrogen or argon is preferable from the viewpoint of ease of facility configuration among these.

For example, in the case of conducting the heat treatment in an inert gas atmosphere, the inert gas may or may not be allowed to flow into the heating furnace. For example, in the case of allowing the inert gas to flow into the heating furnace, the flow rate of the inert gas is not particularly limited, but it is preferably 0.5 L/min or more, more preferably 0.8 L/min or more, and still more preferably 1 L/min or more. It is possible to completely fill the atmosphere in the furnace with an inert gas by allowing the inert gas to flow into the heating furnace at such a flow rate. Meanwhile, the flow rate of the inert gas is preferably 2 L/min or less and more preferably 1.5 L/min or less. When the flow rate of the inert gas is too great, not only the effect corresponding to the flow rate cannot be obtained but also the cost increases in association with an increase in the consumption amount of the inert gas flowed.

In addition, CO gas or coke may be excessively supplied although it is not an essential aspect. This makes it possible to more efficiently remove the sulfur component contained in the sulfur-containing compound such as calcium sulfate of an impurity.

The heating temperature in the first heating step is not particularly limited, but it is preferably 900°C or higher, more preferably 1000°C or higher, and still more preferably 1100°C or higher in order to promote the decomposition reaction of scandium oxalate represented by Formula (1) above and to generate carbon monoxide required for the reaction represented by Formula (2) above in a shorter time. Meanwhile, the upper limit of the heating temperature is preferably 1300°C or lower and more preferably 1200°C or lower. When the heating temperature is too high, the cost for raising the temperature increases and an efficient treatment cannot be conducted. Incidentally, the "heating temperature" in the present specification refers to the final holding temperature.

The heating time (holding time) in the first heating step is not particularly limited, and it may be appropriately adjusted depending on the amount to be treated and the like, but it is preferably 0.5 hour or longer and more preferably 1 hour or longer in order to sufficiently conduct the reaction represented by Formula (2) above and thus to remove the sulfur component. Meanwhile, the upper limit of the heating time is preferably 6 hours or shorter and more preferably 3 hours or shorter in order to prevent an increase in cost in association with an increase in the heating time. Incidentally, the "heating time" in the present specification refers to the holding time at the heating temperature described above.

Incidentally, the time and rate of temperature rise in the heat treatment in the first heating step are not particularly limited, and these can be appropriately set depending on the apparatus, the facility, and the like.

### <1-2. Second Heating Step>

The second heating step is a step of further heating the heated product obtained in the first heating step in an atmosphere containing oxygen. By the present step, it is possible to oxidize scandium oxalate remaining without being oxidized in the first heating step and to convert scandium oxalate to scandium oxide.

The first heating step is a reaction to generate scandium oxide by heating scandium oxalate in an atmosphere not containing oxygen as represented by Formula (1) above, and it is also possible to generate scandium oxide only by the reaction represented by Formula (1). However, the reaction of Formula (1) in which scandium oxalate is heated in an atmosphere not containing oxygen has a significantly low scandium oxide generating rate as compared to the reaction of Formula (3) in which scandium oxide is generated from scandium oxalate by heating scandium oxalate in an atmosphere containing oxygen. Hence, it is required to heat scandium oxalate in an oxidizing atmosphere to which oxygen in the air or the like is supplied so as to terminate the reaction in a shorter time from the viewpoint of industrial efficiency.

The heat treatment in the second heating step is not particularly limited, but it can be conducted in the same apparatus as that used in the heat treatment in the first heating step by changing the gas atmosphere to an atmosphere containing oxygen. Incidentally, different apparatuses may be used for each step, but it is preferable to conduct the treatments in the same apparatus by changing the gas atmosphere from the viewpoint of economic efficiency, ease of facility configuration, and the like. For example, in the same manner as the treatment in the first heating step, it is possible to use various kinds of furnaces such as a tube furnace and it is preferable to use a continuous furnace such as a rotary kiln.

Specifically, the treatment atmosphere in the second heating step is not particularly limited as long as it is an atmosphere containing oxygen, but the volume fraction of oxygen with respect to the entire gas containing oxygen is preferably 18% or more and more preferably 21% or more. In addition, the treatment atmosphere is preferably an air atmosphere from the viewpoint of economic efficiency and the like.

For example, in the case of conducting heat treatment in an air atmosphere, the air may or may not be allowed to flow into the heating furnace. For example, in the case of allowing the air to flow into the heating furnace, the flow rate of the air is not particularly limited but it is preferably 0.5 L/min or more, more preferably 0.8 L/min or more, and still more preferably 1 L/min or more. It is possible to efficiently heat and oxidize scandium oxalate into scandium oxide by allowing the air to flow at such a flow rate. Meanwhile, the flow rate of the air gas is preferably 2 L/min or less and more preferably 1.5 L/min or less. When the flow rate of the air is too great, not only the effect corresponding to the flow rate cannot be obtained but also the cost increases in association with an increase in the consumption amount of the air flowed.

The heating temperature in the second heating step is not particularly limited, but it is preferably 900°C or higher, more preferably 1000°C or higher, and still more preferably 1100°C or higher in order to promote the oxidation reaction of scandium oxalate represented by Formula (3) above and to generate scandium oxide in a shorter time. Meanwhile, the upper limit of the heating temperature is preferably 1300°C or lower and more preferably 1200°C or lower.

The heating time (holding time) in the second heating step is not particularly limited, and it may be appropriately adjusted depending on the amount to be treated and the like, but it is preferably 0.5 hour or longer and more preferably 1 hour or longer in order to sufficiently conduct the oxidation reaction of scandium oxalate represented by Formula (3) above. Meanwhile, the upper limit of the heating time is preferably 6 hours or shorter and more preferably 3 hours or shorter in order to prevent an increase in cost in association with an increase in the heating time.

Incidentally, the time and rate of temperature rise in the heat treatment in the second heating step are not particularly limited, and these can be appropriately set depending on the apparatus, the facility, and the like.

### <<2. Process for Producing Scandium Oxalate>>

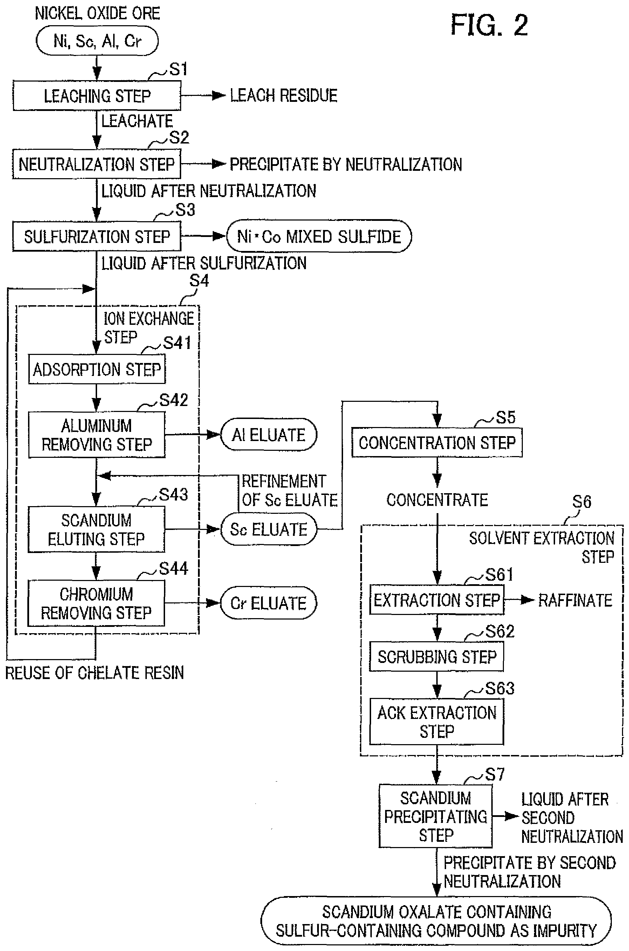

Next, an example of a process for producing scandium oxalate to be a raw material in the process for producing scandium oxide of the present embodiment will be described. Fig. 2 is a flow chart for explaining an example of the process for producing scandium oxalate to be a raw material, namely, scandium oxalate containing a sulfur-containing compound as an impurity.

As an example is illustrated in Fig. 2, scandium oxalate can be obtained by, for example, removing impurities from a solution which exhibits acidity by sulfuric acid and is obtained by wet smelting of a nickel oxide ore containing components such as aluminum and chromium in addition to valuable metals such as nickel and scandium, concentrating scandium in the solution thus obtained, and adding oxalic acid to the concentrated liquid.

Incidentally, examples of the sulfur-containing compound contained in scandium oxalate to be a raw material may include calcium sulfate or a mixture containing these as a main component. In the production of scandium oxalate illustrated in Fig. 2, for example, gypsum can be contained in the nickel oxide ore. In addition, calcium sulfate is generated, for example, as a calcium ion to be supplied from calcium carbonate, slaked lime, and the like to be added in the neutralization step S2 and the concentration step S5 in the wet smelting process of a nickel oxide ore reacts with a sulfate ion in the solution which exhibits acidity by sulfuric acid and is obtained by the wet smelting process. The sulfur-containing compound is generated in the course of producing scandium oxalate and contained in scandium oxalate thus obtained at a predetermined proportion in this manner.

Specifically, the process for producing scandium oxalate to be a raw material can include a leaching step S1 of leaching a nickel oxide ore containing scandium with sulfuric acid at a high temperature and a high pressure to obtain a leachate and a leach residue, a neutralization step S2 of adding a neutralizing agent to the leachate to obtain a precipitate by neutralization and a liquid after neutralization, a sulfurization step S3 of adding a sulfurizing agent to the liquid after neutralization to obtain nickel sulfide and a liquid after sulfurization, an ion exchange step S4 of adsorbing scandium to a chelate resin by bringing the liquid after sulfurization into contact with the chelate resin to obtain a scandium eluate, a scandium concentration step S5 of concentrating scandium in the eluate, a solvent extraction step S6 of extracting and separating impurity elements from the concentrate to obtain an extracted and separated liquid, and a scandium precipitating step S7 of adding oxalic acid to the extracted and separated liquid to generate a precipitation of scandium oxalate.

Incidentally, the ion exchange step S4, the concentration step S5, and the solvent extraction step S6 are provided for the purpose of concentrating scandium and obtaining a concentrate having far higher purity as to be described later, and the process can also be carried out in an aspect not including these steps. For example, the liquid after sulfurization obtained in the sulfurization step S3 can be directly subjected to the scandium precipitating step S7.

Hereinafter, with reference to the flow chart illustrated in Fig. 2, the respective steps of the process for producing scandium oxalate will be described in more detail.

### <Leaching Step>

In the leaching step S1, a nickel oxide ore containing scandium is charged into a high-temperature pressurized vessel (autoclave) or the like together with sulfuric acid, the leaching treatment of the nickel oxide ore using sulfuric acid is conducted while stirring the mixture in an environment of a high temperature of from 240°C to 260°C and a high pressure to generate a leach slurry containing a leachate and a leach residue. Incidentally, the treatment in the leaching step S1 may be conducted in accordance with the conventionally known HPAL process, and the HPAL process is described in, for example, Patent Document 1.

Here, examples of the nickel oxide ore may mainly include a limonite ore and a so-called laterite ore such as a saprolite ore. The nickel content in the laterite ore is usually from 0.8% to 2.5% by weight, and nickel is contained as a hydroxide or a magnesium silicate mineral. These nickel oxide ores contain a large amount of components such as aluminum, chromium, and iron in addition to valuable metals such as nickel, cobalt, and scandium.

Incidentally, a nickel oxide ore contains other minerals including gypsum and a calcium ion in small amounts and these gypsum and calcium ions are contained in the leachate by the leaching treatment in some cases.

In this leaching step S1, the leach slurry which is thus obtained and contains the leachate and the leach residue is separated into a solid and a liquid of a leachate containing nickel, cobalt, scandium, and the like and a leach residue of hematite while being washed. In this solid-liquid separation treatment, for example, the leach slurry is mixed with a washing liquid and then subjected to the solid-liquid separation treatment using an aggregating agent to be supplied from an aggregating agent supplying facility or the like by using a solid-liquid separation facility such as a thickener. Specifically, first, the leach slurry is diluted with the washing liquid and the leach residue in the slurry is then concentrated as a sediment in the thickener. Incidentally, in this solid-liquid separation treatment, it is preferable to connect the solid-liquid separation tanks such as thickeners in multiple stages and to conduct solid-liquid separation while washing the leach slurry in multiple stages.

### <Neutralization Step>

In the neutralization step S2, a neutralizing agent is added to the leachate obtained in the leaching step S1 described above to adjust the pH and to obtain a precipitate by neutralization containing impurity elements and a liquid after neutralization. By the neutralization treatment in this neutralization step S2, valuable metals such as scandium and nickel are contained in the liquid after neutralization and most of the impurities including iron and aluminum form precipitates by neutralization.

As the neutralizing agent, conventionally known ones can be used, and examples thereof may include calcium carbonate and slaked lime.

Here, the calcium ion supplied by the alkali such as calcium carbonate and slaked lime reacts with the sulfate ion in the solution which exhibits acidity by sulfuric acid to form calcium sulfate and the calcium sulfate is mixed into scandium oxalate to be obtained through the subsequent steps as impurities in some cases.

In the neutralization treatment in the neutralization step S2, it is preferable to adjust the pH to be in a range of from 1 to 4 and it is more preferable to adjust the pH to be in a range of from 1.5 to 2.5 while suppressing oxidation of the separated leachate. There is a possibility that the neutralization insufficiently proceed and the mixture cannot be separated into a precipitate by neutralization and a liquid after neutralization when the pH is lower than 1. Meanwhile, there is a possibility that not only impurities including aluminum but also valuable metals such as scandium and nickel are contained in the precipitate by neutralization when the pH exceeds 4.

### <Sulfurization Step>

In the sulfurization step S3, a sulfurizing agent is added to the liquid after neutralization obtained in the neutralization step S2 to obtain nickel sulfide and a liquid after sulfurization. By the sulfurization treatment in this sulfurization step S3, nickel, cobalt, zinc, and the like are converted into sulfides and scandium and the like are contained in the liquid after sulfurization.

Specifically, in this sulfurization step S3, a sulfurizing agent such as hydrogen sulfide gas, sodium sulfide, sodium hydride sulfide, or the like is added to the liquid after neutralization obtained to generate a sulfide (nickel·cobalt mixed sulfide) containing nickel and cobalt and small amounts of impurity components and a liquid after sulfurization which contains scandium and the like and has a nickel concentration stabilized at a low level.

In the sulfurization treatment in the sulfurization step S3, the slurry of the nickel·cobalt mixed sulfide is subjected to a sedimentation treatment using a sedimenting apparatus such as thickener to separate and recover the nickel·cobalt mixed sulfide from the bottom of the thickener and the liquid after sulfurization of an aqueous solution component is allowed to overflow and recovered.

### <Ion Exchange Step>

In the ion exchange step S4, scandium contained in the liquid after sulfurization is adsorbed to the chelate resin by bringing the liquid after sulfurization obtained by the wet smelting treatment of a nickel oxide ore described above into contact with a chelate resin to obtain a scandium eluate from which impurity components have been removed.

The aspect of the ion exchange step S4 is not particularly limited, but it is preferable that the ion exchange step S4 includes an adsorption step S41 of bringing the liquid after sulfurization into contact with a chelate resin to adsorb scandium to the chelate resin, an aluminum removing step S42 of bringing a sulfuric acid solution at 0.1 N or less into contact with the chelate resin to which scandium is adsorbed to remove aluminum adsorbed to the chelate resin in the adsorption step S41, a scandium eluting step S43 of bringing a sulfuric acid solution at 0.3 N or more and 3 N or less into contact with the chelate resin subjected to the aluminum removing step S42 to obtain a scandium eluate, and a chromium removing step S44 of bringing a sulfuric acid solution at 3 N or more into contact with the chelate resin subjected to the scandium eluting step S43 to remove chromium adsorbed to the chelate resin in the adsorption step S41, for example, as illustrated in the example of Fig. 2.

### [Adsorption Step]

In the adsorption step S41, the liquid after sulfurization is brought into contact with a chelate resin to adsorb scandium to the chelate resin. The chelate resin is not particularly limited, but it is preferable to use, for example, a resin having iminodiacetic acid as a functional group.

### [Aluminum Removing Step]

In the aluminum removing step S42, a sulfuric acid solution at 0.1 N or less is brought into contact with the chelate resin to which scandium is adsorbed in the adsorption step S41 to remove aluminum adsorbed to the chelate resin in the adsorption step S41. When removing aluminum, the pH of the sulfuric acid solution is maintained preferably in a range of from 1 to 2.5 and more preferably in a range of from 1.5 to 2.0.

### [Scandium Eluting Step]

In the scandium eluting step S43, a sulfuric acid solution at 0.3 N or more and 3 N or less is brought into contact with the chelate resin subjected to the aluminum removing step S42 to obtain a scandium eluate. When obtaining the scandium eluate, the normality of the sulfuric acid solution to be used as the eluent is maintained preferably in a range of 0.3 N or more and less than 3 N and more preferably in a range of 0.5 N or more and less than 2 N.

### [Chromium Removing Step]

In the chromium removing step S44, a sulfuric acid solution at 3 N or more is brought into contact with the chelate resin subjected to the scandium eluting step S43 to remove chromium adsorbed to the chelate resin in the adsorption step S41.

### [Iron Removing Step]

In addition, although it is not illustrated, the leachate obtained from the nickel oxide ore contains iron as an impurity in some cases. In this case, it is preferable that a sulfuric acid solution having a normality smaller than the normality of the sulfuric acid solution to be used in the aluminum removing step S42 is brought into contact with the chelate resin which has adsorbed scandium in the adsorption step S41 to remove iron adsorbed to the chelate resin in the adsorption step S41 prior to the aluminum removing step S42. When removing iron adsorbed to the chelate resin, it is preferable to maintain the pH of the sulfuric acid solution in a range of from 1 to 3.

By such an ion exchange treatment, it is possible to obtain a scandium eluate from which various impurity elements such as aluminum and chromium are removed and in which scandium is concentrated. Incidentally, it is possible to increase the concentration of scandium eluate by subjecting the scandium eluate obtained to the treatment in the scandium eluting step S43 again, namely, repeatedly conducting the treatment to bring the scandium eluate obtained into contact with the chelate resin subjected to the aluminum removing step S42. In addition, the chelate resin from which chromium and the like have been removed can be reused in the adsorption step S41 again.

### <Concentration Step>

Next, scandium contained in the scandium eluate can be concentrated by providing a concentration step S5 subsequently to the ion exchange step S4 described above. As the concentration treatment, for example, it is possible to conduct a treatment in which a precipitate of scandium contained in the scandium eluate is generated and separated from impurities and this precipitate is dissolved in a sulfuric acid solution or the like to generate a concentrated liquid to be subjected to solvent extraction in the next step. More specifically, as a process for concentrating scandium in this concentration step S5, namely a process for generating a precipitate of scandium and separating it from impurities, for example, a hydroxylation and neutralization process can be used.

### [Hydroxylation and Neutralization]

In the hydroxylation and neutralization treatment of the scandium eluate, the pH is adjusted to about 8 or higher and 9 or lower by adding a neutralizing agent of an alkali such as calcium carbonate or slaked lime to the scandium elute obtained in the ion exchange step S4 described above to conduct the neutralization treatment and to generate a precipitation of scandium hydroxide and a liquid after neutralization containing impurity components.

Here, the calcium ion supplied by the alkali such as calcium carbonate or slaked lime reacts with the sulfate ion in the solution which exhibits acidity by sulfuric acid to form calcium sulfate and the calcium sulfate is mixed into scandium oxalate to be obtained through the subsequent steps as impurities in some cases.

### [Dissolution in Sulfuric Acid]

Next, the precipitate of scandium hydroxide obtained by the hydroxylation and neutralization treatment is dissolved by adding a sulfuric acid solution to the precipitate to generate a sulfuric acid solution of scandium. The sulfuric acid solution of scandium thus obtained is the target of the solvent extraction treatment (starting liquid for extraction) in the solvent extraction step S6 of the next step.

In this manner, by providing the concentration step S5 subsequently to the ion exchange step S4, it is possible to greatly remove the impurities contained in the scandium eluate and to decrease the number of steps in the ion exchange step S4 and the solvent extraction step S6 of the next step.

### <Solvent Extraction Step>

In the solvent extraction step S6, the concentrated liquid obtained in the concentration step S5 described above is used as a starting liquid for extraction, the starting liquid for extraction is brought into contact with an extracting agent, and a back extracting agent is added to the extraction liquid thus obtained to obtain a back extract containing scandium.

The aspect of the solvent extraction step S6 is not particularly limited, but the solvent extraction step S6 can include an extraction step S61 of mixing the starting liquid for extraction with an organic solvent containing an extracting agent to obtain an organic solvent after extraction and a raffinate, a scrubbing step S62 of mixing a washing solution with this organic solvent after extraction to separate and recover scandium extracted into the extracting agent, and a back extraction step S63 of adding a back extracting agent to the organic solvent after washing to back-extract the impurity elements from the organic solvent after washing and to obtain a back extract, for example, as illustrated in the example of Fig. 2.

### [Extraction Step]

In the extraction step S61, the concentrate of the starting liquid for extraction is mixed with an organic solvent containing an extracting agent to selectively extract scandium into the organic solvent. The extracting agent is not particularly limited and may be determined from the viewpoint of selectivity with respect to scandium, and for example, it is possible to use a solvating extracting agent containing phosphorus, specifically, one having trioctylphosphine oxide (TOPO) as a functional group. Incidentally, at the time of extraction, it is preferable to dilute the extracting agent with a hydrocarbon-based organic solvent or the like for use.

Incidentally, it is also possible to selectively leave scandium in the raffinate by extracting the impurities into the organic solvent containing an extracting agent depending on the kind of extracting agent to be used in the extraction step 61. In this case, it is possible to subject the raffinate to the scandium precipitating step S7 instead of the back extraction solution to be described later.

### [Scrubbing (Washing) Step]

Although it is not an essential aspect, it is preferable to subject the organic solvent (organic phase) to a scrubbing (washing) treatment to separate the impurity elements into the aqueous phase and thus to remove the impurity elements from the extracting agent before back-extracting the extraction liquid (scrubbing step S62).

A hydrochloric acid solution and a sulfuric acid solution can be used as the solution (washing solution) to be used for scrubbing. A concentration range of 2.0 mol/L or more and 9.0 mol/L or less is preferable in the case of using a hydrochloric acid solution, and a concentration range of 3.5 mol/L or more and 9.0 mol/L or less is preferable in the case of using a sulfuric acid solution.

### [Back Extraction Step]

In the back extraction step S63, scandium is back-extracted from the organic solvent into which scandium is extracted. In this back extraction step S63, water or an acid solution having a low concentration is mixed with an organic solvent as a back-extraction solution (starting liquid for back extraction) to conduct the reverse reaction of the reaction at the time of extraction and to obtain an extracted and separated liquid (back extract) containing scandium.

Water may be used as the starting liquid for back extraction, but there is a possibility that the phase separation between water and the organic phase is poor. Hence, it is preferable to use an acid solution having a low concentration as the starting liquid for back extraction. As the acid solution, a sulfuric acid solution having a concentration of about 3.5 mol/L or less can be used.

Incidentally, it is also possible to conduct a sulfuric acid double salt precipitating step instead of the solvent extraction step S6 although it is not illustrated. The sulfuric acid double salt precipitating step includes a precipitation step of adding a crystal of sodium sulfate to a scandium-containing acidic solution to generate a precipitate of sulfuric acid double salt, a neutralization step of neutralizing a solution obtained by dissolving the precipitate of sulfuric acid double salt with sodium hydroxide or the like, and a redissolution step of redissolving scandium hydroxide obtained by neutralization to obtain a solution. The impurities may be removed by such a treatment to generate a precipitate of sulfuric acid double salt.

### <Scandium Precipitating Step>

Next, in the scandium precipitating step S7, a precipitate of scandium oxalate is generated from the extracted and separated liquid which contains scandium and is obtained in the solvent extraction step S6.

The aspect of treatment in the scandium precipitating step S7 is not particularly limited as long as a precipitate of scandium oxalate can be generated, but it is possible to use the extracted and separated liquid obtained in the solvent extraction step S6 as a starting liquid for oxalate formation and to conduct a treatment to deposit and precipitate a white crystal solid of scandium oxalate by adding oxalic acid to the starting liquid for oxalate formation, for example, as illustrated in the example of Fig. 2.

The amount of oxalic acid added is not particularly limited, but it is preferably an amount to be 1.05 times or more and 2.0 times or less the equivalent required to deposit scandium in the starting liquid for oxalate formation as an oxalic acid salt. When the added amount is less than 1.05 times the equivalent required for deposition, there is a possibility that the entire amount of scandium cannot be recovered. Meanwhile, when the added amount exceeds 2.0 times the equivalent required for deposition, scandium is redissolved and the recovery rate thereof decreases as the solubility of scandium oxalate increases or the amount of an oxidizing agent such as hypochlorine soda to be used in order to decompose excessive oxalic acid increases.

The pH of the starting liquid for oxalate formation when conducting the reaction for oxalate formation is not particularly limited, but it is preferably about 0 or higher and 2 or lower and still more preferably about 1. When the pH is 0 or lower to be too low, there is a possibility that the solubility of scandium oxalate increases and the recovery rate of scandium decreases. Meanwhile, when the pH exceeds 2, impurities contained in the extracted and separated liquid also form a precipitation to cause a decrease in scandium purity.

By conducting the respective steps as described above, it is possible to produce scandium oxalate to be a raw material for production of scandium oxide.

Here, sulfur-containing compounds such as calcium sulfate are contained in scandium oxide thus obtained as impurities in the course of scandium oxide production. In this regard, according to the process for producing scandium oxide according to the present embodiment (see Fig. 1), it is possible to effectively remove sulfur components contained in scandium oxalate since scandium oxide is produced by subjecting scandium oxalate to be a raw material to a two-step heat treatment. This makes it possible to efficiently produce high purity scandium oxide having a suppressed sulfur content.

### EXAMPLES

Hereinafter, the present invention will be described more specifically with reference to Examples of the present invention and Comparative Examples. Incidentally, the present invention is not limited to the following Examples at all.

### [Example]

### (Preparation of Scandium Oxalate of Raw Material)

First, scandium oxalate to be a raw material for production of scandium oxide was prepared.

Specifically, a nickel oxide ore was used as a raw material and subjected to a known HPAL process to obtain a leachate into which nickel and scandium were leached, slaked lime was then added to the leachate thus obtained to conduct a neutralization treatment and to separate impurities from the leachate. Subsequently, hydrogen sulfide gas was blown into the leachate from which impurities had been separated as a sulfurizing agent to conduct a sulfurization treatment and to separate nickel as a sulfide.

Next, a known ion exchange treatment to adsorb the scandium ions in the solution after sulfurization treatment (liquid after sulfurization) to a chelate resin was conducted. A dilute sulfuric acid solution at about 0.1 N was allowed to flow through the chelate resin to which scandium was adsorbed to elute and remove aluminum, and a solution obtained by allowing a sulfuric acid solution at about 2 N to flow was then recovered and used as a scandium eluate.

Next, a known solvent extraction treatment was conducted by using the scandium eluate thus obtained. Scandium in the solution was concentrated by a process including such an ion exchange treatment and such a solvent extraction treatment in combination, thereby obtaining an extracted and separated liquid. Incidentally, sulfuric acid was then added to the extracted and separated liquid thus obtained to adjust the pH to 0 and this solution was maintained in the room temperature range of from 25°C to 30°C.

Subsequently, the extracted and separated liquid was added into the reaction tank filled with oxalic acid solution having an oxalic acid concentration of 100 g/L over 3.5 to 4 hours as a starting liquid for oxalate formation and reacted for 1 hour while being stirred (oxalate forming treatment). Here, in the oxalate forming treatment, the amount of the oxalic acid solution filled in the reaction tank was adjusted so as to be 2.7 equivalents with respect to scandium contained in the starting liquid for oxalate formation to be added by taking the amount of oxalic acid required to convert scandium into scandium oxalate as 1 equivalent.

After the oxalate forming treatment, the precipitate of scandium oxalate crystal thus obtained was filtered and separated from the filtrate. The precipitate thus separated was subjected to repulp washing using pure water three times and dried at 105°C by using a vacuum dryer.

### (Production of Scandium Oxide)

Next, scandium oxide was produced by using the precipitate of scandium oxalate as a raw material.

Specifically, the precipitate of scandium oxalate thus obtained was put in a quartz boat by 60 g and the quartz boat was placed in a tube furnace in which a quartz tube was set. Thereafter, nitrogen gas was allowed to flow into the quartz tube at a flow rate of 1 L/min to obtain a nitrogen gas atmosphere, and the internal temperature was raised to 1100°C over 3 hours. After the internal temperature reached 1100°C, a heat treatment was conducted by keeping the internal temperature at 1100°C for 1 hour while continuously allowing nitrogen gas to flow (first heating step).

Next, air was allowed to flow into the quartz tube at a flow rate of 1 L/min to switch the atmosphere to an air atmosphere, and a heat treatment was conducted by keeping the internal temperature at 1100°C for 1 hour while continuously allowing the air to flow (second heating step).

Thereafter, nitrogen gas was again allowed to flow into the quartz tube at a flow rate of 1 L/min to switch the atmosphere to a nitrogen gas atmosphere, and the quartz tube was cooled to room temperature. After cooling, about 20 g of scandium oxide crystals remaining in the quartz boat was recovered and the content of sulfur component as an impurity therein was analyzed.

### [Comparative Example]

At the time of production of scandium oxide, air was allowed to flow into a quartz tube set in a tube furnace at a flow rate of 1 L/min to obtain an air atmosphere, the internal temperature was raised to 1100°C over 3 hours, and a heat treatment was then conducted by keeping the internal temperature at 1100°C for 2 hours while continuously allowing the air to flow. Thereafter, the quartz tube was cooled to room temperature while allowing the air to flow. In other words, only a heat treatment in an air atmosphere was conducted in this Comparative Example.

After cooling, about 20 g of scandium oxide crystals remaining in the quartz boat was recovered and the content of sulfur component as an impurity therein was analyzed in the same manner as in Example 1.

Incidentally, in Examples and Comparative Examples, the treatment was conducted by using raw material (scandium oxalate) samples of different lots since the content of sulfur as an impurity in scandium oxalate before the heat treatment in the production of scandium oxide varied. Specifically, the treatment was conducted by using 11 samples in Examples and 13 samples in Comparative Examples.

### [Evaluation]

The contents of sulfur components in five kinds of representative samples (Examples 1 to 5 and Comparative Examples 1 to 5) before a heat treatment in each of Examples and Comparative Examples and the content of sulfur component in scandium oxide obtained by subjecting the raw material samples to the heat treatment are presented in Table 1.

**[Table 1]**

| | Gas atmosphere | Content of S before heating (ppm) | After heating (scandium oxide) | |
|---|---|---|---|---|
| | | | Content of S (ppm) | Content of SO₄ (ppm) |
| Example 1 | N₂→Air (Two steps) | 20 | <10 | <30 |
| Example 2 | | 40 | <10 | <30 |
| Example 3 | | 73 | <10 | <30 |
| Example 4 | | 93 | <10 | <30 |
| Example 5 | | 150 | <10 | <30 |
| Comparative Example 1 | Air | 10 | 40 | 120 |
| Comparative Example 2 | | 20 | 60 | 180 |
| Comparative Example 3 | | 29 | 70 | 210 |
| Comparative Example 4 | | 50 | 100 | 300 |
| Comparative Example 5 | | 80 | 120 | 360 |

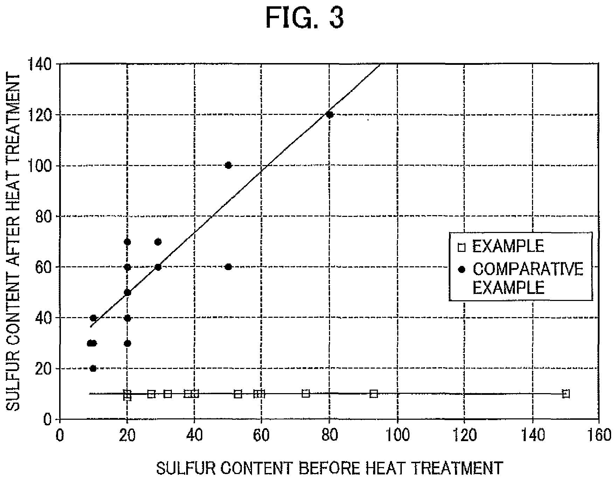

In addition, the relation between the sulfur contents in 11 samples of Examples and 13 samples of Comparative Examples before and after the heat treatment are illustrated in Fig. 3. Incidentally, in this Fig, 3, the horizontal axis represents the content of sulfur contained in scandium oxalate before the heat treatment and the vertical axis represents the content of sulfur contained in scandium oxide obtained after the heat treatment.

As can be seen from the results in Table 1 and Fig. 3, in Examples, it was possible to remove the sulfur content in scandium oxide obtained after the heat treatment to a value equal to or below the detection limit of the analyzer regardless of the sulfur content in scandium oxalate before the heat treatment.

On the other hand, in Comparative Examples, the sulfur content of scandium oxide obtained by the heat treatment was greater than the sulfur content of scandium oxalate of the raw material. In Comparative Examples, as the reason for that the sulfur content of scandium oxide obtained by heating has increased, it is considered that the sulfur component itself has not been removed even though the molecular weight and total amount of the sample have decreased in association with the conversion of scandium oxalate into scandium oxide.

As described above, it has been found that it is possible to effectively remove a sulfur component which cannot be removed only by heating in an atmosphere containing oxygen and thus to obtain high purity scandium oxide by treating scandium oxalate by two-step heating to heat scandium oxalate in an atmosphere not containing oxygen and then to heat the scandium oxalate in an atmosphere containing oxygen.

## Claims

1. A process for producing scandium oxide, the process comprising:
a first heating step of heating scandium oxalate containing a sulfur-containing compound as an impurity in an atmosphere not containing oxygen; and
a second heating step of further heating a heated product obtained in the first heating step in an atmosphere containing oxygen.

2. The process for producing scandium oxide according to claim 1, wherein the scandium oxalate is a precipitate obtained by adding oxalic acid to a solution which contains scandium and exhibits acidity by sulfuric acid.

3. The process for producing scandium oxide according to claim 2, wherein the solution which exhibits acidity by sulfuric acid is a solution obtained by adding a neutralizing agent to a leachate obtained by leaching a nickel oxide ore with sulfuric acid.

## Patentansprüche

1. Verfahren zum Herstellen von Scandiumoxid, wobei das Verfahren umfasst:
einen ersten Erwärmungsschritt zum Erhitzen von Scandiumoxalat, das eine Schwefel enthaltende Verbindung als Verunreinigung enthält, in einer Atmosphäre, die keinen Sauerstoff enthält, und
einen zweiten Erwärmungsschritt zum weiteren Erhitzen eines erhitzten Produkts, das im ersten Erwärmungsschritt erhalten wurde, in einer Atmosphäre, die Sauerstoff enthält.

2. Verfahren zum Herstellen von Scandiumoxid nach Anspruch 1, wobei es sich bei dem Scandiumoxalat um ein Ausfällungsprodukt handelt, das erhalten wurde durch Zugeben von Oxalsäure zu einer Lösung, die Scandium enthält und einen Säuregehalt durch Schwefelsäure aufweist.

3. Verfahren zum Herstellen von Scandiumoxid nach Anspruch 2, wobei es sich bei der Lösung, die einen Säuregehalt durch Schwefelsäure aufweist, um eine Lösung handelt, die erhalten wurde durch Zugeben eines Neutralisierungsmittels zu einem Auslaugungsprodukt, das durch Auslaugen eines Nickeloxiderzes mit Schwefelsäure erhalten wurde.

## Revendications

1. Procédé pour la production d'oxyde de scandium, le procédé comprenant :
une première étape de chauffage, de chauffage d'oxalate de scandium contenant un composé contenant du soufre en tant qu'impureté dans une atmosphère ne contenant pas d'oxygène ; et
une deuxième étape de chauffage, de chauffage supplémentaire d'un produit chauffé obtenu dans la première étape de chauffage dans une atmosphère contenant de l'oxygène.

2. Procédé pour produire de l'oxyde de scandium selon la revendication 1, dans lequel l'oxalate de scandium est un précipité obtenu par addition d'acide oxalique à une solution qui contient du scandium et présente une acidité par de l'acide sulfurique.

3. Procédé pour produire de l'oxyde de scandium selon la revendication 2, dans lequel la solution qui présente une acidité par de l'acide sulfurique est une solution obtenue par addition d'un agent de neutralisation à un lixiviat obtenu par lixiviation d'un minerai d'oxyde de nickel avec de l'acide sulfurique.
